# EUROPEAN PATENT APPLICATION

(11) **EP 4 629 059 A1**
(43) Date of publication of application: **08.10.2025**
(21) Application number: 22968183.8
(22) Date of filing: 15.12.2022
(51) Int. Cl.: G06F 8/65, H04L 9/32

(54) **UPGRADING METHOD, APPARATUS AND SYSTEM**

(71) Applicant: Shenzhen Yinwang Intelligent Technologies Co., Ltd., Shenzhen, Guangdong 518110 (CN)
(72) Inventor: ZHONG, Fei, Shenzhen, Guangdong 518129 (CN); ZHANG, Guicheng, Shenzhen, Guangdong 518129 (CN)
(74) Representative: Gill Jennings & Every LLP
(86) International application number: PCT/CN2022/139251
(87) International publication number: WO 2024/124474

(57) **Abstract**

An upgrade method and apparatus, and a system are provided, and relate to the field of vehicle-to-everything technologies. The method includes: obtaining a software upgrade requirement of at least one electronic control unit ECU of a vehicle, where the at least one ECU is associated with a power battery or a storage battery of the vehicle; and when it is determined that the power battery or the storage battery is not faulty, performing an upgrade operation of the vehicle based on the software upgrade requirement; or when it is determined that the power battery or the storage battery is faulty, suspending an upgrade operation of the vehicle. The method can improve a success rate of upgrading a vehicle-mounted component.

## Description

### TECHNICAL FIELD

Embodiments of this application relate to the field of vehicle-to-everything technologies, and in particular, to an upgrade method and apparatus, and a system.

### BACKGROUND

With development of vehicle-to-everything technologies, an over the air (over the air, OTA) technology is widely used in upgrade of vehicle-mounted components. The vehicle-mounted components include telematics communication terminals, and further include vehicle-mounted controllers (for example, a passive entry passive start (passive entry passive start, PEPS) controller, a battery management system (battery management system, BMS), a motor control unit (motor control unit, MCU), and a power distribution unit (power distribution unit, PDU)). Therefore, upgrade of the vehicle-mounted components is complex.

However, in a process of upgrading a vehicle-mounted component, once a battery (for example, including a storage battery or a power battery) that supplies power to the vehicle-mounted component is lower on electricity or is powered off due to a fault, upgrade fails. Consequently, user mobile data is wasted, and even some functions of a vehicle are unavailable.

Therefore, how to ensure a success rate of upgrading a vehicle-mounted component is still an important problem that urgently needs to be resolved.

### SUMMARY

This application provides an upgrade method and apparatus, and a system, to improve a success rate of upgrading a vehicle-mounted component.

According to a first aspect, an embodiment of this application provides an upgrade method. The method may be performed by an OTA control unit. The OTA control unit may be implemented as a communication apparatus. The communication apparatus may be an independent device, or may be a chip or a component in a device, or may be software, and the communication apparatus may be configured in a terminal device. The terminal device may include a vehicle, a management device associated with an OTA server, or an intelligent terminal of a user who uses the vehicle. For example, the communication apparatus may be an application, and may be installed or run on a chip or a component of the vehicle, or on an intelligent device like a mobile phone or a tablet computer in the vehicle. Alternatively, the communication apparatus may be a software module, and may be deployed in each electronic control unit (electronic control unit, ECU) of the vehicle. Alternatively, the communication apparatus may be a newly added hardware module in the vehicle. Related determining logic or a related determining algorithm may be configured in the hardware module, and the hardware module may be used as an ECU in the vehicle to communicate information with another ECU through an internal communication network, to implement the upgrade method in this embodiment of this application. A product form, a deployment manner, or the like of the OTA control unit is not limited in embodiments of this application.

For example, the terminal device is a vehicle. The communication apparatus corresponding to the OTA control unit may be a telematics box (telematics BOX, T-BOX), also referred to as a telematics control unit (telematics control unit, TCU), which may integrate with functional modules such as a global positioning system (global positioning system, GPS), an external communication interface, an ECU, a microcontroller, a mobile communication unit, and a memory. Internally, the T-BOX may be connected to a vehicular bus (that is, an internal communication network of the terminal device, for example, a CAN bus). Externally, the T-BOX may implement information exchange, on a cloud platform, between a vehicle terminal, a handheld device, or a roadside unit (roadside unit, RSU), and a public network using vehicle to vehicle (vehicle to vehicle, V2V), vehicle to road (vehicle to road, V2R), vehicle to human (vehicle to human, V2H), or vehicle to internet (vehicle to internet, V2I) for communication.

The upgrade method may include: obtaining a software upgrade requirement of at least one electronic control unit ECU of a vehicle, where the at least one ECU is associated with a power battery or a storage battery of the vehicle; and when it is determined that the power battery or the storage battery is not faulty, performing an upgrade operation of the vehicle based on the software upgrade requirement; or when it is determined that the power battery or the storage battery is faulty, suspending an upgrade operation of the vehicle.

According to the foregoing method, the OTA control unit may determine, based on whether the power battery or the storage battery of the vehicle associated with the at least one ECU of the vehicle is faulty, whether to perform the upgrade operation of the vehicle, to reduce impact of another operation of the vehicle or a fault of a vehicle-mounted component on the OTA upgrade operation of the vehicle. This ensures implementation of the OTA upgrade operation of the vehicle, and helps ensure driving experience and driving safety of a vehicle user.

It should be noted that, in this embodiment of this application, the upgrade operation is any operation related to OTA upgrade, and may include but is not limited to: The vehicle sends an OTA upgrade request to a server, the vehicle receives an upgrade request entered or selected by the user, the vehicle downloads an OTA upgrade package from the server, the vehicle confirms OTA content, the vehicle installs the OTA upgrade package, the vehicle activates the OTA upgrade package, a rollback operation, and the like. Details are not described herein again.

With reference to the first aspect, in a possible implementation, the obtaining a software upgrade requirement of at least one electronic control unit ECU of a vehicle includes: receiving an upgrade task from an over the air OTA server, where the upgrade task indicates the software upgrade requirement of the at least one ECU; or obtaining the software upgrade requirement of the at least one ECU based on first indication information entered by a user on user equipment UE, where the UE includes the vehicle.

According to the foregoing method, the OTA control unit may receive the software upgrade requirement from the OTA server or the UE, to trigger an OTA upgrade procedure of the vehicle. It should be understood that the information herein is merely example descriptions for triggering the procedure of the upgrade operation of the vehicle, and does not constitute any limitation. In some embodiments, the OTA control unit may initiate the procedure of the upgrade operation of the vehicle when receiving the indication information. The indication information may include the OTA upgrade package. Details are not described herein again.

With reference to the first aspect, in a possible implementation, the upgrade task or the first indication information further indicates a high voltage signal or a low voltage signal associated with the at least one ECU, the high voltage signal is associated with the power battery, and the low voltage signal is associated with the storage battery.

According to the foregoing method, for example, when initiating the OTA upgrade procedure of the vehicle, the OTA server and the user may indicate, by using the high voltage signal or the low voltage signal, an association between the at least one ECU of the vehicle and the power battery or the storage battery of the vehicle, so that the OTA control unit can monitor a status of the power battery or the storage battery, to flexibly control implementation of the upgrade operation of the vehicle.

With reference to the first aspect, in a possible implementation, the method further includes: receiving second indication information from the OTA server or receiving third indication information from the UE, where the second indication information and the third indication information indicate to detect whether the power battery or the storage battery is faulty, and the UE includes the vehicle or an intelligent terminal of the user who uses the vehicle.

According to the foregoing method, for example, the OTA control unit may receive related indication information from the OTA server or the UE, to start monitoring the status of the power battery or the storage battery of the vehicle, so as to timely detect whether the power battery or the storage battery is faulty. In this way, when the battery is faulty, the upgrade operation of the vehicle is suspended, or the upgrade operation of the vehicle is resumed timely after the battery fault is rectified, to improve an OTA upgrade success rate of the vehicle.

With reference to the first aspect, in a possible implementation, the method further includes: outputting fault information of the power battery or the storage battery on a human machine interface HMI, where the HMI belongs to the vehicle, or the HMI belongs to the intelligent terminal of the user who uses the vehicle, or the HMI belongs to an output device associated with the over the air OTA server.

According to the foregoing method, the OTA control unit may output the fault information of the power battery or the storage battery in real time on the HMI, so that the user using the HMI can monitor the status of the battery timely.

With reference to the first aspect, in a possible implementation, the method further includes: outputting, on the HMI, a reason for suspending the upgrade operation of the vehicle, where the HMI belongs to the vehicle, or the HMI belongs to the intelligent terminal of the user who uses the vehicle, or the HMI belongs to the output device associated with the over the air OTA server; and the reason for suspending the upgrade operation of the vehicle includes that the power battery is faulty or the storage battery is faulty.

According to the foregoing method, the OTA control unit may output a reason for failure of the upgrade operation of the vehicle in real time on the HMI, so that the user can find and resolve a problem in time, to improve an OTA upgrade success rate of the vehicle.

With reference to the first aspect, in a possible implementation, the method further includes: recording upgrade progress information of the at least one ECU; and after a fault of the power battery or a fault of the storage battery is rectified, continuing to perform the upgrade operation of the vehicle based on the software upgrade requirement and upgrade progress information recorded when the upgrade operation of the vehicle is suspended.

According to the foregoing method, the OTA control unit can record the upgrade progress information timely, so that after the fault of the battery is rectified, the OTA control unit can continue to perform the upgrade operation of the vehicle based on upgrade progress information recorded when the upgrade operation of the vehicle is suspended, instead of starting the upgrade anew. This helps reduce upgrade duration, and save user mobile data.

With reference to the first aspect, in a possible implementation, the upgrade progress information includes information about any one of the following phases: an upgrade phase, an activation phase, or a rollback phase, and information about any one of the following states of the ECU in each phase: an initial state, a notified execution state, an execution success state, or an execution failure state. It should be understood that, in this embodiment of this application, the upgrade progress information may include information about different phases or different states in OTA upgrade, and names of the phases or the states in OTA upgrade are not limited.

With reference to the first aspect, in a possible implementation, the method further includes: outputting the upgrade progress information on the HMI, where the HMI belongs to the vehicle, or the HMI belongs to the intelligent terminal of the user who uses the vehicle, or the HMI belongs to the output device associated with the OTA server.

According to the foregoing method, the OTA control unit may output the upgrade progress information of the vehicle in real time on the HMI, so that the user can view an upgrade progress timely.

With reference to the first aspect, in a possible implementation, the method further includes: obtaining software upgrade time sequence information of the at least one ECU; and the performing an upgrade operation of the vehicle based on the software upgrade requirement includes: performing the upgrade operation of the vehicle based on the software upgrade requirement and the software upgrade time sequence information.

According to the foregoing method, the OTA control unit may further obtain software upgrade time sequence information of different ECUs, and sequentially implement upgrade operations of different ECUs based on the software upgrade time sequence information. For example, the software upgrade time sequence information may include a serial time sequence or a parallel time sequence of different ECUs. The serial time sequence indicates that different ECUs needs to perform OTA upgrade sequentially in the serial sequence, and the parallel time sequence indicates that at least two ECUs in different ECUs may perform OTA upgrade concurrently.

With reference to the first aspect, in a possible implementation, the performing an upgrade operation of the vehicle based on the software upgrade requirement specifically includes: obtaining an upgrade package of the at least one ECU based on the software upgrade requirement; and performing the upgrade operation of the vehicle based on the upgrade package.

With reference to the first aspect, in a possible implementation, the method further includes: determining, based on status information of the vehicle, that the vehicle meets an upgrade condition, where the status information is used to describe a hardware status and/or a software status of the vehicle.

With reference to the first aspect, in a possible implementation, the status information includes at least one of the following: electricity information of the storage battery of the vehicle, electricity information of the power battery of the vehicle, a speed of the vehicle, gear information of the vehicle, or braking information of the vehicle; and the upgrade condition includes at least one of the following: electricity of the storage battery is greater than or equal to a first threshold, electricity of the power battery is greater than or equal to a second threshold, the speed of the vehicle is less than or equal to a third threshold, the vehicle is in a parking gear, or the vehicle is in a parking brake state.

According to a second aspect, an embodiment of this application provides an upgrade method. The method may be applied to an HMI. The method may include: receiving control information, where the control information is associated with a software upgrade requirement of at least one electronic control unit ECU of a vehicle, and the at least one ECU is associated with a power battery or a storage battery of the vehicle; and when the power battery or the storage battery is not faulty, outputting upgrade progress information of the at least one ECU based on the control information; or when the power battery or the storage battery is faulty, outputting, based on the control information, a reason for suspending an upgrade operation of the vehicle.

It should be noted that, in this embodiment of this application, the control information may be from at least one device, including but not limited to an OTA server, user equipment (for example, an intelligent terminal like a mobile phone or a tablet computer of a user), or a third-party device (for example, a charging device that charges the vehicle, or a management device of the charging device). This is not limited in embodiments of this application. The HMI may perform comprehensive decision-making based on the control information from the at least one device, and output the upgrade progress information of the at least one ECU or the reason for suspending the upgrade operation of the vehicle. Details are not described herein again.

With reference to the second aspect, in a possible implementation, the upgrade progress information includes information about any one of the following phases: an upgrade phase, an activation phase, or a rollback phase, and information about any one of the following states of the ECU in each phase: an initial state, a notified execution state, an execution success state, or an execution failure state.

With reference to the second aspect, in a possible implementation, the method further includes: receiving second indication information from an OTA server or receiving third indication information from UE, where the second indication information and the third indication information indicate to detect whether the power battery or the storage battery is faulty; and outputting the second indication information or the third indication information.

It should be noted that this embodiment is merely an example for describing a manner of generating the second indication information or the third indication information, and does not constitute any limitation. In actual application, the second indication information or the third indication information may not be entered by the user. For example, the second indication information or the third indication information may be from the third-party device. In another possible implementation, the second indication information or the third indication information in this embodiment may be an example of the control information. Specific content and a receiving occasion of the control information are not limited in embodiments of this application.

With reference to the second aspect, in a possible implementation, the method further includes: outputting fault information of the power battery or the storage battery.

According to a third aspect, an embodiment of this application provides an upgrade apparatus, including: an obtaining unit, configured to obtain a software upgrade requirement of at least one electronic control unit ECU of a vehicle, where the at least one ECU is associated with a power battery or a storage battery of the vehicle; and an execution unit, configured to: when it is determined that the power battery or the storage battery is not faulty, perform an upgrade operation of the vehicle based on the software upgrade requirement; or when it is determined that the power battery or the storage battery is faulty, suspend an upgrade operation of the vehicle.

With reference to the third aspect, in a possible implementation, the obtaining unit is specifically configured to: receive an upgrade task from an over the air OTA server, where the upgrade task indicates the software upgrade requirement of the at least one ECU; or obtain the software upgrade requirement of the at least one ECU based on first indication information entered by a user on user equipment UE, where the UE includes the vehicle.

With reference to the third aspect, in a possible implementation, the upgrade task or the first indication information further indicates a high voltage signal or a low voltage signal associated with the at least one ECU, the high voltage signal is associated with the power battery, and the low voltage signal is associated with the storage battery.

With reference to the third aspect, in a possible implementation, the apparatus further includes a transceiver unit, configured to receive second indication information from the OTA server or receive third indication information from the UE, where the second indication information and the third indication information indicate to detect whether the power battery or the storage battery is faulty, and the UE includes the vehicle or an intelligent terminal of the user who uses the vehicle.

With reference to the third aspect, in a possible implementation, the execution unit is further configured to: output fault information of the power battery or the storage battery on a human machine interface HMI, where the HMI belongs to the vehicle, or the HMI belongs to the intelligent terminal of the user who uses the vehicle, or the HMI belongs to an output device associated with the over the air OTA server.

With reference to the third aspect, in a possible implementation, the execution unit is further configured to: output, on the HMI, a reason for suspending the upgrade operation of the vehicle, where the HMI belongs to the vehicle, or the HMI belongs to the intelligent terminal of the user who uses the vehicle, or the HMI belongs to the output device associated with the over the air OTA server; and the reason for suspending the upgrade operation of the vehicle includes that the power battery is faulty or the storage battery is faulty.

With reference to the third aspect, in a possible implementation, the apparatus further includes: a recording unit, configured to record upgrade progress information of the at least one ECU; and the execution unit is further configured to: after a fault of the power battery or a fault of the storage battery is rectified, continue to perform the upgrade operation of the vehicle based on the software upgrade requirement and upgrade progress information recorded when the upgrade operation of the vehicle is suspended.

With reference to the third aspect, in a possible implementation, the upgrade progress information includes information about any one of the following phases: an upgrade phase, an activation phase, or a rollback phase, and information about any one of the following states of the ECU in each phase: an initial state, a notified execution state, an execution success state, or an execution failure state. It should be understood that, in this embodiment of this application, the upgrade progress information may include information about different phases or different states in OTA upgrade, and names of the phases or the states in OTA upgrade are not limited.

With reference to the third aspect, in a possible implementation, the execution unit is further configured to: output the upgrade progress information on the HMI, where the HMI belongs to the vehicle, or the HMI belongs to the intelligent terminal of the user who uses the vehicle, or the HMI belongs to the output device associated with the OTA server.

With reference to the third aspect, in a possible implementation, the obtaining unit is further configured to obtain software upgrade time sequence information of the at least one ECU; and the execution unit is specifically configured to perform the upgrade operation of the vehicle based on the software upgrade requirement and the software upgrade time sequence information.

With reference to the third aspect, in a possible implementation, the execution unit is specifically configured to: obtain an upgrade package of the at least one ECU based on the software upgrade requirement; and perform the upgrade operation of the vehicle based on the upgrade package.

With reference to the third aspect, in a possible implementation, the apparatus further includes a determining unit, configured to determine, based on status information of the vehicle, that the vehicle meets an upgrade condition, where the status information is used to describe a hardware status and/or a software status of the vehicle.

With reference to the third aspect, in a possible implementation, the status information includes at least one of the following: electricity information of the storage battery of the vehicle, electricity information of the power battery of the vehicle, a speed of the vehicle, gear information of the vehicle, or braking information of the vehicle; and the upgrade condition includes at least one of the following: electricity of the storage battery is greater than or equal to a first threshold, electricity of the power battery is greater than or equal to a second threshold, the speed of the vehicle is less than or equal to a third threshold, the vehicle is in a parking gear, or the vehicle is in a parking brake state.

According to a fourth aspect, an embodiment of this application provides an upgrade apparatus, including: a transceiver unit, configured to receive control information, where the control information is associated with a software upgrade requirement of at least one electronic control unit ECU of a vehicle, and the at least one ECU is associated with a power battery or a storage battery of the vehicle; and an output unit, configured to: when the power battery or the storage battery is not faulty, output upgrade progress information of the at least one ECU based on the control information; or when the power battery or the storage battery is faulty, output, based on the control information, a reason for suspending an upgrade operation of the vehicle.

With reference to the fourth aspect, in a possible implementation, the upgrade progress information includes information about any one of the following phases: an upgrade phase, an activation phase, or a rollback phase, and information about any one of the following states of the ECU in each phase: an initial state, a notified execution state, an execution success state, or an execution failure state.

With reference to the fourth aspect, in a possible implementation, the transceiver unit is further configured to: receive second indication information from an OTA server or receive third indication information from UE, where the second indication information and the third indication information indicate to detect whether the power battery or the storage battery is faulty; and the output unit is further configured to output the second indication information or the third indication information.

With reference to the fourth aspect, in a possible implementation, the output unit is further configured to output fault information of the power battery or the storage battery.

According to a fifth aspect, an embodiment of this application provides a communication apparatus. The communication apparatus includes: a communication interface, configured to communicate with another apparatus; and a processor, coupled to the communication interface, so that the communication apparatus performs the method according to the first aspect and any one of the possible implementations of the first aspect or the method according to the second aspect and any one of the possible implementations of the second aspect.

According to a sixth aspect, an embodiment of this application provides a computer-readable storage medium. The computer-readable storage medium stores a computer program, and when the computer program is run on a computer, the computer is enabled to perform the method according to the first aspect and any one of the possible implementations of the first aspect or the method according to the second aspect and any one of the possible implementations of the second aspect.

According to a seventh aspect, an embodiment of this application provides a computer program product. The computer program product includes a computer program, and when the computer program is run on a computer, the computer is enabled to perform the method according to the first aspect and any one of the possible implementations of the first aspect or the method according to the second aspect and any one of the possible implementations of the second aspect.

According to an eighth aspect, an embodiment of this application provides a chip, including a processor. The processor is coupled to a memory and is configured to execute a computer program or instructions stored in the memory. When the computer program or the instruction is/are executed, the method according to the first aspect and any one of the possible implementations of the first aspect is implemented; or the method according to the second aspect and any one of the possible implementations of the second aspect is implemented.

According to a ninth aspect, an embodiment of this application provides a vehicle, including a unit configured to implement the method according to the first aspect and any one of the possible implementations of the first aspect.

With reference to the fourth aspect, in a possible implementation, the vehicle includes a unit configured to implement the method according to the second aspect and any one of the possible implementations of the second aspect.

According to a tenth aspect, an embodiment of this application provides a communication system, including an upgrade apparatus configured to implement the method according to the first aspect and any one of the possible implementations of the first aspect, or an upgrade apparatus configured to implement the method according to the second aspect and any one of the possible implementations of the second aspect.

According to an eleventh aspect, an embodiment of this application provides a terminal device. The terminal device may be configured to implement the method according to the first aspect and any one of the possible implementations of the first aspect or the method according to the second aspect and any one of the possible implementations of the second aspect. In an example, the terminal device includes but is not limited to: an intelligent transportation device (for example, an automobile, a ship, an uncrewed aerial vehicle, a train, and a truck), an intelligent manufacturing device (for example, a robot, an industrial device, smart logistics, and a smart factory), and an intelligent terminal (a mobile phone, a computer, a tablet, a palmtop computer, a desktop computer, a headset, a speaker, a wearable device, a vehicle-mounted device, and the like).

Based on the implementations provided in the foregoing aspects, embodiments of this application may be further combined to provide more implementations.

For technical effect that can be achieved in any possible implementation of any one of the second aspect to the eleventh aspect, refer to descriptions of the technical effect that can be achieved in any possible implementation of the first aspect. Repeated details are not described.

### BRIEF DESCRIPTION OF DRAWINGS

FIG. 1 is a diagram of an application scenario to which an embodiment of this application is applicable;
FIG. 2 is a diagram of a vehicle architecture according to an embodiment of this application;
FIG. 3 is a schematic flowchart of an upgrade method according to an embodiment of this application;
FIG. 4 is a schematic flowchart of an upgrade method according to an embodiment of this application;
FIG. 5 is a diagram of a software upgrade time sequence according to an embodiment of this application;
FIG. 6 is a diagram of an upgrade apparatus according to an embodiment of this application;
FIG. 7 is a diagram of an upgrade apparatus according to an embodiment of this application; and
FIG. 8 is a diagram of a communication apparatus according to an embodiment of this application.

### DESCRIPTION OF EMBODIMENTS

For ease of understanding, the following first describes some terms in embodiments of this application.

### 1. User

The "user" described in embodiments of this application is a person who uses a terminal device. The user may include an owner (or referred to as an owner, an owner, or the like) of the terminal device, or may include another person authorized by the owner of the terminal device to use the terminal device, for example, a relative, a friend, or a colleague of the owner of the terminal device. For example, the terminal device is a vehicle. The user may be a vehicle owner, or may be another person authorized by the vehicle owner to use the vehicle.

It should be understood that, for an autonomous vehicle, the user may be a virtual user, or may be a real person who manages the vehicle. This is not limited in embodiments of this application.

In embodiments of this application, for ease of distinguishing, an example in which the terminal device is a vehicle is used. The user may include a first user and a second user. The first user is an owner of the vehicle, and the second user is an authorized user other than the owner of the vehicle. Distinguishing and details are not described one by one below again.

### 2. User equipment (user equipment, UE)

Generally, the user equipment is an electronic device used by a user.

For example, a terminal device is a vehicle. The user equipment may include a vehicle terminal of the vehicle used by the user or an intelligent terminal of the user, for example, a mobile phone or a tablet computer. For an autonomous vehicle, the user equipment may be a vehicle terminal of the vehicle, or may be an intelligent terminal placed on the vehicle, for example, a mobile phone or a tablet computer, or may be another electronic device associated with the vehicle, for example, an electronic device controlled by a vehicle administrator, including but not limited to a desktop computer, a notebook computer, a mobile phone, or a tablet computer. A product form of the user equipment is not limited in embodiments of this application.

In embodiments of this application, a communication system configured to implement an upgrade method may include an OTA server and at least one user equipment. The user equipment may include at least one of a terminal device (for example, a vehicle), an intelligent terminal of a first user (which may be referred to as a first terminal for short), or an intelligent terminal of a second user (which may be referred to as a second terminal for short). In different embodiments, the upgrade method in embodiments of this application may be implemented by any one of the following device combinations: the OTA server and the vehicle; the OTA server, the vehicle, and the intelligent terminal of the first user; the OTA server, the vehicle, and the intelligent terminal of the second user; or the OTA server, the vehicle, the intelligent terminal of the first user, and the intelligent terminal of the second user. The following describes in detail the upgrade method implemented by each device combination with reference to a method flowchart, and details are not described herein.

### 3. Storage battery and power battery

The storage battery supplies power to an engine when a vehicle is started. When the vehicle engine works normally after being started, a vehicle generator charges the storage battery with generated electricity. When the engine is running normally, the electricity generated by the generator is generally integrated, through rectification, filtering, and voltage adjustment, into 12 V electricity for use of the entire vehicle. When the engine is not working, some devices such as an in-vehicle speaker and a vehicle light are powered by the storage battery.

The power battery is specially configured for a new energy vehicle to supply power to the vehicle and supply power to auxiliary appliances of the entire vehicle.

### 4. High voltage signal or low voltage signal

In a new energy vehicle, the high voltage signal may indicate a first energy supply unit corresponding to a to-be-upgraded component (for example, a vehicle terminal) of the vehicle during upgrade. The first energy supply unit is, for example, a power battery. The low voltage signal may indicate a second power supply unit corresponding to a to-be-upgraded component (for example, a battery management system) of the vehicle during upgrade. The second power supply unit is, for example, a storage battery. Electricity of the first energy supply unit is greater than that of the second energy supply unit, and/or a voltage peak that can be provided by the first energy supply unit is greater than a voltage peak that can be provided by the second energy supply unit.

### 5. Upgrade operation

In embodiments of this application, the upgrade operation is an operation associated with OTA upgrade. An upgrade operation of a vehicle may include but is not limited to: The vehicle sends an upgrade request to an OTA server; the vehicle receives an upgrade request entered or selected by a user; the vehicle downloads an upgrade package from the OTA server; the vehicle confirms OTA content; the vehicle installs the upgrade package; the vehicle activates the upgrade package; and the like.

In an optional implementation, when determining that the vehicle needs to perform OTA upgrade (for example, there is an updated version of software), the OTA server may send related indication information to the vehicle, and the indication information is used to trigger an OTA upgrade procedure of the vehicle. The vehicle may receive the indication information from the OTA server, and automatically determine, or determine, through interaction with the user, whether to perform the upgrade operation of the vehicle.

For example, the indication information may indicate a software upgrade requirement of at least one electronic control unit (electronic control unit, ECU) of the vehicle. When a power battery or a storage battery is not faulty and a related component of the vehicle meets a corresponding upgrade condition, the vehicle may perform the upgrade operation of the vehicle based on the software upgrade requirement. When the power battery is faulty or the storage battery is faulty, the upgrade operation of the vehicle is suspended.

For example, the indication information may include but is not limited to one or more of the following: an OTA activity content reminder, an OTA activity content confirmation, an OTA start and implementation reminder, an OTA upgrade package download reminder, an OTA upgrade package, and OTA process (including processes such as downloading, installation, and activation of the OTA upgrade package) monitoring.

In an implementation, the vehicle may automatically check a status of a vehicle-mounted component, for example, whether the power battery is faulty, whether the storage battery is faulty, electricity of the power battery, electricity of the storage battery, a speed of the vehicle, and a gear, to determine whether a status of the vehicle allows performing the upgrade operation of the vehicle. In another implementation, the vehicle may include an output device (for example, a human machine interface (human machine interface, HMI) or a speaker) and/or an input device (for example, an HMI or a microphone), and the vehicle may output the indication information to the user by using the output device, and receive input information of the user by using the input device. The input information may be used to control performing of the upgrade operation of the vehicle. For example, the input information of the user may be used to send the upgrade request, confirm to perform the upgrade operation, refuse to perform the upgrade operation, or delay performing the upgrade operation.

In another implementation, the OTA server may be configured to obtain status information of a vehicle-mounted component of the vehicle, where the status information is used to describe (or indicate) a status of the vehicle-mounted component, including but not limited to whether the power battery of the vehicle is faulty, whether the storage battery is faulty, electricity of the power battery, electricity of the storage battery, a speed of the vehicle, a gear, and the like. The OTA server may determine, based on the status information, whether a vehicle end is allowed to perform the related upgrade operation. When determining that the vehicle is allowed to perform the upgrade operation, the OTA server may send the related indication information to a terminal device. In some embodiments, for example, when the OTA server cannot directly communicate with the vehicle, an intelligent terminal of a first user or an intelligent terminal of a second user may be used as an intermediate device between the OTA server and the vehicle, the OTA server may send the related indication information to the intelligent terminal of the first user or the intelligent terminal of the second user, and the first user may assist in performing the upgrade operation of the vehicle by using the intelligent terminal of the first user or the second user may assist in performing the upgrade operation of the vehicle by using the intelligent terminal of the second user.

In other words, in embodiments of this application, a decision-making body of the upgrade operation of the vehicle is not limited. For example, the OTA server may perform decision-making based on the status information of the vehicle-mounted component, or the vehicle may perform decision-making based on the status information of the vehicle-mounted component. A receiver of the indication information from the OTA server may be the vehicle, the intelligent terminal of the first user, or the intelligent terminal of the second user. This is not limited either. In actual application, the upgrade method in embodiments of this application may be collaboratively implemented by a combination of at least two devices in the OTA server, the vehicle, the intelligent terminal of the first user, or the intelligent terminal of the second user. For detailed descriptions, refer to the following related descriptions with reference to the accompanying drawings. Details are not described herein again.

### 6. Status information

In embodiments of this application, information that describes (or indicates) a status of a vehicle or a vehicle-mounted component is referred to as status information.

For example, a terminal device is a vehicle. The status information may reflect, by indicating a status of the entire vehicle or a status of a vehicle-mounted component, whether a side of a vehicle is allowed to perform an upgrade operation of the vehicle. For example, the status information may indicate, by indicating a status of an engine of the vehicle, whether the vehicle is in a start state. For another example, the status information may reflect, by indicating a status of a battery (including a power battery or a storage battery) of the vehicle, whether the battery of the vehicle is faulty. For another example, the status information may indicate, by indicating a status of at least one of a throttle system, a parking system, or a braking system of the vehicle, whether the vehicle is in a running state. For another example, the status information may indicate, by indicating a status of a sensing system, whether the vehicle is in a sensing state. The sensing state may include but is not limited to the following states: whether a camera of the vehicle captures an image of an ambient environment of the vehicle, whether a wheel speed sensor of the vehicle collects a rotation speed of a wheel, or whether a water temperature sensor of the vehicle collects temperature information of a vehicle component. Specific content of the status information is not limited in embodiments of this application.

It may be understood that, in embodiments of this application, the status information may be obtained from the vehicle, or may be obtained from another device associated with the vehicle. For example, the another device associated with the vehicle may include a charging device (or referred to as a charging pile) that charges the vehicle, or a roadside device. The charging device may provide the status information to indicate whether to charge the vehicle, and the roadside device may provide the status information to indicate whether the vehicle is near the roadside device (for example, staying near the roadside device or driving past the roadside device). In actual application, the status information provided by the another device associated with the vehicle is not limited to the foregoing examples. Any information that is provided by the another device and that can indicate the status of the vehicle or the vehicle-mounted component may be used as an example of the status information.

In addition, an intelligent terminal of a first user or an intelligent terminal of a second user may also provide the status information. For example, the intelligent terminal of the first user or the intelligent terminal of the second user may monitor the terminal device, and provide obtained monitoring information as the status information for the terminal device or an OTA server. Similarly, the status information provided by the intelligent terminal of the first user or the intelligent terminal of the second user may be any proper information. This is not limited in embodiments of this application, and details are not described herein again.

It should be noted that the foregoing descriptions are merely examples of a meaning of the status information by using the vehicle as an example, and does not constitute any limitation. In another embodiment, any information that can be used for the status of the entire vehicle or the vehicle-mounted component may be used as the status information. Details are not described herein again.

In embodiments of this application, the status information is used to determine whether the upgrade operation of the vehicle can be performed. An electronic device serving as a decision-making party, for example, any one of the OTA server, the vehicle, the intelligent terminal of the first user, or the intelligent terminal of the second user, may obtain the status information, and determine, based on the status information, whether to perform the upgrade operation of the vehicle and how to perform the upgrade operation of the vehicle. An obtaining manner of the status information includes but is not limited to any one of the following: determining the status information based on an internal preset relationship; obtaining the status information in a query manner based on an identifier of the another device associated with the vehicle (for example, the charging device that charges the vehicle or the roadside device); and receiving the status information from the another device (for example, the charging device).

For example, when the OTA server serves as the decision-making party, for example, the OTA server may obtain the status information from at least one of the vehicle, the another device associated with the vehicle (for example, the charging device that charges the vehicle, or a management device of the charging device), the intelligent terminal of the first user, or the intelligent terminal of the second user. For another example, when the vehicle serves as the decision-making party, for example, the vehicle may determine the status information based on an internal preset relationship of the vehicle, and obtain the status information from at least one of the another device associated with the vehicle (for example, the charging device that charges the vehicle or a management device of the charging device), the intelligent terminal of the first user, or the intelligent terminal of the second user. For another example, when the intelligent terminal of the first user or the intelligent terminal of the second user serves as the decision-making party, for example, the intelligent terminal of the first user or the intelligent terminal of the second user may obtain the status information from the vehicle or the another device associated with the vehicle (for example, the charging device that charges the terminal device or a management device of the charging device). Any one of the foregoing decision-making parties may obtain the status information based on a specification of a preset decision-making manner or any proper manner required by a service, and perform comprehensive decision-making by using the obtained status information. A manner in which any decision-making party obtains the status information is not limited in embodiments of this application. Distinguishing and details are not described one by one below again.

Embodiments of this application provide an upgrade method and apparatus, and a system. A status of a vehicle-mounted component (for example, a power battery and/or a storage battery of a vehicle) is detected in real time or periodically, to determine, based on whether the vehicle-mounted component is faulty or whether the fault is rectified, whether to perform an upgrade operation of the vehicle. This helps reduce a probability of an upgrade failure as much as possible, helps save user mobile data, and helps reduce a possibility that some functions of the vehicle are unavailable. The method and the apparatus are based on a same technical concept. Because a problem-resolving principle of the method is similar to a problem-resolving principle of the apparatus, for implementations of the apparatus and the method, refer to each other. No repeated description is provided. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

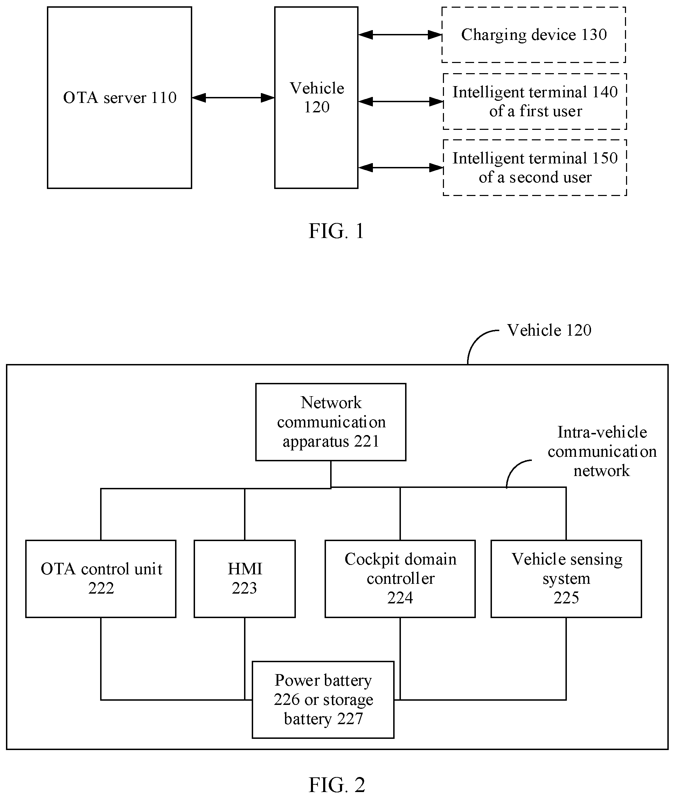

FIG. 1 is a diagram of an application scenario to which an embodiment of this application is applicable.

As shown in FIG. 1, the application scenario may include an OTA server 110 and a vehicle 120. In an optional implementation, the application scenario may further include another device associated with the vehicle, for example, at least one of a charging device 130, an intelligent terminal 140 of a first user (for example, an owner of the vehicle 120), or an intelligent terminal 150 of a second user (for example, a user of the vehicle 120). Any two of the OTA server 110, the vehicle 120, the charging device 130, the intelligent terminal 140 of the first user, or the intelligent terminal 150 of the second user may communicate with each other. The communication manner may be a wired communication manner or a wireless communication manner. This is not limited in embodiments of this application. A dashed-line box in FIG. 1 merely schematically indicates that a corresponding device is an optional device.

The OTA server 110 may trigger an OTA upgrade procedure on a side of the vehicle 120.

For example, when learning that software on the side of the vehicle 120 needs to be upgraded, the OTA server 110 may obtain an upgrade task of the vehicle 120, and selectively send the upgrade task to any one of the vehicle 120, the intelligent terminal 140 of the first user, or the intelligent terminal 150 of the second user, so that the OTA server 110 and at least one of the vehicle 120, the intelligent terminal 140 of the first user, or the intelligent terminal 150 of the second user collaboratively perform an upgrade operation of the vehicle 120 based on the upgrade task.

For example, the upgrade task may include upgrade operation information, and the upgrade operation information may include but is not limited to one or more of the following: an OTA activity content reminder, an OTA activity content confirmation, an OTA start and implementation reminder, an OTA upgrade package download reminder, and OTA process (including processes such as downloading, installation, and activation of an OTA file package) monitoring. After receiving the upgrade operation information, any one of the vehicle 120, the intelligent terminal 140 of the first user, and/or the intelligent terminal 150 of the second user may output the upgrade operation information, and a corresponding user on a device side may perform a subsequent related operation based on the upgrade operation information output by the device, to complete the upgrade operation for the vehicle 120. In addition, in a process of implementing OTA upgrade on the side of the vehicle 120, the first user or the second user may further learn of an upgrade progress status by using the vehicle 120, the intelligent terminal of the first user, or the intelligent terminal of the second user.

For example, in a process in which the first user uses the vehicle 120, the vehicle 120 may receive and output the upgrade task from the OTA server, and the first user may perform subsequent related processing based on the upgrade task, for example, determine OTA activity content, determine to start and implement OTA upgrade, and determine to download an OTA upgrade package, so as to determine that the vehicle 120 implements a related procedure of OTA upgrade. In addition, the first user may monitor an implementation progress of OTA upgrade. For another example, the intelligent terminal 140 of the first user or the intelligent terminal 150 of the second user may receive and output the upgrade task from the OTA server 110 via a short message, an email, an application, or the like, and the first user or the second user may perform subsequent related processing based on the upgrade task, for example, determine OTA activity content, determine to start and implement OTA upgrade, and determine to download an OTA upgrade package, to remotely determine that the vehicle 120 starts and implement a related procedure of OTA upgrade. In addition, the first user or the second user may monitor an OTA upgrade implementation progress on the respective intelligent terminal of the first user or the second user.

It should be understood that this is merely a function example of the OTA server 110 and does not constitute any limitation. In some embodiments, the OTA server 110 may alternatively receive related indication information from the vehicle 120, the charging device 130, the intelligent terminal 140 of the first user, or the intelligent terminal 150 of the second user, to trigger the OTA upgrade procedure on the side of the vehicle 120. In other words, the OTA server 110 may actively or passively trigger the OTA upgrade procedure on the side of the vehicle 120. This is not limited in embodiments of this application.

The vehicle 120 may include, for example, but is not limited to, electronic control units (electronic control units, ECUs) such as a network communication apparatus 221, an OTA control unit 222, a human machine interface (human machine interface, HMI) 223, a cockpit domain controller 224, and a vehicle sensing system 225, and an intra-vehicle communication network (for example, a CAN bus) configured to implement internal communication of the vehicle shown in FIG. 2.

The network communication apparatus 221 may be used as a communication bridge between an external device like the OTA server 110, the charging device 130, the intelligent terminal 140 of the first user, or the intelligent terminal 150 of the second user and the internal ECU of the vehicle 120, to implement capabilities such as receiving, sending, and forwarding of indication information related to OTA upgrade or other information. Inside the vehicle 120, for example, the network communication apparatus 221 may communicate information with each ECU of the vehicle 120 through the intra-vehicle communication network like the CAN bus. In this embodiment of this application, the network communication apparatus 221 may support a wireless communication manner or a wired communication manner. This is not limited in embodiments of this application.

The OTA control unit 222 may be used as a decision-making unit for implementing OTA upgrade control in the vehicle 120, and may perform comprehensive decision-making based on one or more of the following information: the upgrade task from the OTA server 110, input information obtained from the HMI 223, related status information obtained from the cockpit domain controller 224, related status information obtained from the vehicle sensing system 225, related status information obtained from another ECU, input information from user equipment, and the like, to obtain a decision-making result, for example, performing the upgrade operation of the vehicle, skipping performing the upgrade operation of the vehicle, suspending the upgrade operation of the vehicle, resuming the upgrade operation of the vehicle, or skipping resuming the upgrade operation of the vehicle. Further, a specific implementation of the upgrade operation is controlled based on the decision-making result.

It should be understood that, in this embodiment of this application, the OTA control unit 222 and the network communication apparatus 221 may be different unit modules, or may be a same unit module, for example, a telematics box (telematics box, T-BOX), also referred to as a telematics control unit (telematics control unit, TCU), which may integrate with functional modules such as a global positioning system (global positioning system, GPS), an external communication interface, an ECU, a microcontroller, a mobile communication unit, and a memory. Internally, the T-BOX may be connected to a vehicular bus (that is, an internal communication network of a terminal device, for example, the CAN bus). Externally, the T-BOX may implement information exchange, on a cloud platform, between a vehicle terminal, a handheld device, or a roadside unit (roadside unit, RSU), and a public network using V2V, V2R, V2H, or V2S for communication. Alternatively, the OTA control unit 222 may be a newly added hardware module in the vehicle. Related determining logic or a related determining algorithm may be configured in the hardware module, and the hardware module may be used as an ECU in the vehicle 120 to communicate information with another ECU through an internal communication network of the vehicle, to implement the upgrade method in this embodiment of this application. A product form of the OTA control unit 222 is not limited in embodiments of this application.

In an optional implementation, the OTA control unit 222 may be logically divided into different subunits based on functions of the OTA control unit. For example, the OTA control unit 222 may include an OTA upgrade main control unit, a battery fault monitoring unit, and an ECU upgrade context management unit.

The OTA upgrade main control unit may be configured to implement vehicle OTA procedure control on the side of the vehicle 120. The battery fault monitoring unit may be configured to: monitor a status of a battery (including a power battery and/or a storage battery) of the vehicle, and record fault information of the battery when the corresponding battery is faulty. The fault information may include but is not limited to a fault reason, a fault mark, and the like. The OTA upgrade main control unit may communicate with the battery fault monitoring unit, and determine, based on the fault information recorded by the battery fault monitoring unit, whether a battery is faulty. If a battery is faulty, an upgrade operation of an ECU associated with the faulty battery cannot be performed. In this case, the ongoing OTA upgrade operation is suspended, or the upgrade operation that has not started is not performed. If no battery is faulty, the OTA upgrade operation that is being performed may continue to be performed, or a to-be-performed upgrade operation may start to be performed.

The ECU upgrade context management unit is configured to record upgrade progress information of each ECU during upgrade, including but not limited to information about any one of the following phases: an upgrade phase, an activation phase, or a rollback phase, and information about any one of the following states of the ECU in each phase: an initial state, a notified execution state, an execution success state, or an execution failure state. The OTA upgrade main control unit may communicate with the ECU upgrade context management unit, and determine, based on the recorded upgrade progress information, how to perform a subsequent upgrade operation. For example, if the OTA upgrade main control unit receives the upgrade task and the ECU upgrade context management unit does not record any upgrade progress information, the OTA upgrade main control unit may perform the upgrade operation of the vehicle based on the upgrade task anew. For another example, if an upgrade operation is interrupted because a battery fault occurs in an upgrade process of an ECU, and consequently, the upgrade operation of the vehicle is suspended, after the fault of a related battery is rectified, the OTA upgrade main control unit may continue, based on upgrade progress information recorded when the upgrade operation of the vehicle is suspended, to perform the upgrade operation of the vehicle.

It should be noted that this is merely an example for describing a function of the OTA control unit in this embodiment of this application, and does not constitute any limitation. In actual application, units that are of the OTA control unit and that are configured to implement the foregoing functions may be deployed in a same ECU, for example, the T-Box, or may be deployed in different ECUs. For example, the OTA upgrade main control unit may be deployed in the T-Box, the battery fault monitoring unit may be deployed in a battery management system, and the ECU upgrade context management unit may be deployed in any ECU of the vehicle. A product form or a function deployment manner of the OTA control unit is not limited in embodiments of this application.

It should be noted that, in this embodiment of this application, the vehicle 120 may further include an ECU flashing unit. The ECU flashing unit is configured to flash an OTA upgrade package to a specific ECU during OTA upgrade. In actual application, the ECU flashing unit may be an independent ECU in the vehicle 120, or the ECU flashing unit may be deployed in a control unit of each ECU. A product form or a deployment manner of the ECU flashing unit is not limited in embodiments of this application.

The HMI 223 is an input device/output device in the vehicle 120. The HMI 223 may communicate with the OTA control unit 222 through an intra-vehicle communication network, and provide an OTA operation interface, and may be configured to output indication information, output OTA upgrade progress information, receive input information of a user, and the like. The HMI 223 may have a respective communication identifier and communication address, and may be configured to: receive to-be-output indication information, or provide the obtained input information for another module. For example, the HMI 223 may include a vehicle-mounted device like a vehicle display (for example, a touchscreen), or may include an external associated device like a smartphone or a tablet computer located in the vehicle 120. This is not limited in embodiments of this application.

The vehicle sensing system 225 may include, for example, a sensor component like a camera. The vehicle sensing system 225 may obtain related status information of the entire vehicle or a vehicle component through sensing, and provide the related status information for the OTA control unit 222 or another ECU. In an optional implementation, for example, the vehicle sensing system 225 may provide the obtained related status information to the cockpit domain controller 224, and the cockpit domain controller 224 may perform other data processing or decision-making based on the obtained related status information. Details are not described herein again. In another implementation, the vehicle sensing system 225 may alternatively provide a sensing result for the cockpit domain controller 224, and the cockpit domain controller 224 may obtain the related status information based on the sensing result, and provide the related status information for the OTA control unit 222. This helps the OTA control unit 222 perform comprehensive decision-making. The status information transferred between ECUs in the vehicle and a transmission form are not limited in embodiments of this application.

The charging device 130 may be configured to charge the vehicle 120. In an optional implementation, the charging device 130 may alternatively be replaced with a roadside device or another device. The charging device 130, the roadside device, or the another device may communicate with the vehicle 120 or the OTA server 110, and provide the related status information for the vehicle 120 or the OTA server 110.

The intelligent terminal 140 of the first user and/or the intelligent terminal 150 of the second user may communicate with the OTA server 110 and the network communication apparatus of the vehicle 120 via a mobile network. When the OTA server 110 determines that indication information (for example, the indication information indicates a software upgrade requirement of the terminal device) can be directly sent to the intelligent terminal 140/150, the OTA server 110 may directly send the indication information to the intelligent terminal 140/150. The intelligent terminal 140/150 may further receive the indication information forwarded by the network communication apparatus of the ego vehicle 120. For example, an OTA application may be installed and run on a side of the intelligent terminal 140/150. The owner of the vehicle or the authorized user of the vehicle may control a running status of the vehicle 120 by using an application running on the respective intelligent terminal of the vehicle owner or the authorized user of the vehicle, and may control an OTA upgrade process of the vehicle 120 based on communication with the OTA server 110. In a process of implementing the upgrade method in this embodiment of this application, at least one of the HMI 223 and the intelligent terminal 140/150 may be used as an output device to output the indication information from the OTA server 110. The output device may be a device that finally outputs the indication information, or the output device may be an output device that outputs the indication information in the upgrade process. An output manner and an output occasion of the indication information are not limited in embodiments of this application. At least one of the HMI 223 and the intelligent terminal 140/150 may be used as an input device to receive the input information of the user. The input information may be the indication information from the user, and indicates whether to perform the upgrade operation of the vehicle. An input manner and an input occasion of the input information of the user are not limited in embodiments of this application.

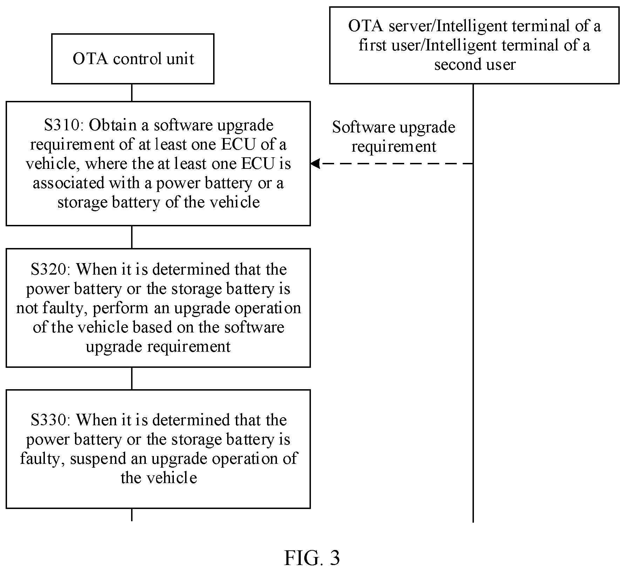

Based on the architecture shown in FIG. 1 and FIG. 2, an embodiment of this application provides an upgrade method. The method may be implemented by the OTA control unit in FIG. 2. As shown in FIG. 3, the upgrade method may include the following steps.

S310: An OTA control unit obtains a software upgrade requirement of at least one electronic control unit ECU of a vehicle.

In this embodiment of this application, the software upgrade requirement may be a software version update requirement caused when software corresponding to any ECU of the vehicle has a new version. Software upgrade means updating control software corresponding to the ECU from an earlier version to a version. The later version usually can fix some functional defects or deficiencies of the earlier version. After the software is upgraded, better performance may be obtained, user requirements may be better met, and virus intrusion may be prevented. When S310 is implemented, for example, the OTA control unit of the vehicle may obtain the software upgrade requirement from an OTA server or user equipment. The user equipment may include an input device of the vehicle or an intelligent terminal of a user. On a side of the user equipment, the user may query, by using the user equipment, the OTA server whether the software upgrade requirement exists. If the software upgrade requirement exists, the user equipment may forward the software upgrade requirement from the OTA server to the OTA control unit of the vehicle. If the software upgrade requirement does not exist, the user equipment may notify the OTA control unit of the vehicle. An initiation manner of the software upgrade requirement is not limited herein.

For example, the OTA server is a service party that manages software versions of different vehicles in a unified manner. The OTA server may perform OTA activity preparatory work, for example, prepare an OTA upgrade package and formulate an OTA-related message, and determine a target vehicle that needs to perform OTA upgrade. The vehicle that may perform OTA upgrade may include all vehicles on which to-be-upgraded software is installed, or any vehicle selected from all the vehicles. A manner of determining the vehicle is not limited in embodiments of this application. When S310 is implemented, the OTA server may send an upgrade task to the target vehicle, and content of the upgrade task may indicate software upgrade requirements of different ECUs of the target vehicle. Correspondingly, the OTA control unit of the target vehicle may receive the upgrade task from the OTA server. Alternatively, the OTA server may send an upgrade task to the intelligent terminal of the user, the intelligent terminal of the user may forward the upgrade task to the target vehicle, and content of the upgrade task may indicate software upgrade requirements of different ECUs of the target vehicle. Alternatively, the user may send, to the OTA control unit of the vehicle by using the intelligent terminal used by the user, first indication information entered by the user on the user equipment, so that the OTA control unit of the vehicle obtains the software upgrade requirement of the at least one ECU based on the first indication information. The input device of the vehicle may include, for example, an HMI or a microphone. The user may send, to the OTA control unit of the vehicle by using the input device based on a requirement of the user or based on related information output by the output device of the vehicle, the first indication information entered by the user, so that the OTA control unit of the vehicle may obtain the software upgrade requirement of the at least one ECU based on the first indication information.

It should be noted that, in this embodiment of this application, both the upgrade task from the OTA server and the first indication information from the user equipment may be sent in real time, or may be sent based on a reservation plan. An initiation manner or a sending occasion of the software upgrade requirement is not limited in embodiments of this application.

In this embodiment of this application, the at least one ECU of the vehicle is associated with a power battery or a storage battery of the vehicle, and the power battery or the storage battery may be configured to provide electric energy for a corresponding ECU, so that the ECU runs and implements a corresponding function. When learning of the software upgrade requirement of the at least one ECU, the OTA control unit usually performs an upgrade operation of the vehicle based on the software upgrade requirement. However, if a battery that provides electric energy for the entire vehicle or the ECU is faulty, software upgrade of the ECU cannot succeed, and a success rate of software upgrade of the entire vehicle is affected. Therefore, before performing the upgrade operation of the vehicle, the OTA control unit needs to determine whether the power battery or the storage battery associated with the target ECU that is to perform software upgrade is faulty. Further, the OTA control unit may determine, based on a status of the power battery or the storage battery, whether to perform the upgrade operation of the vehicle.

For example, S320: When determining that the power battery or the storage battery is not faulty, the OTA control unit performs the upgrade operation of the vehicle based on the software upgrade requirement.

For another example, S330: When determining that the power battery or the storage battery is faulty, the OTA control unit suspends the upgrade operation of the vehicle.

In this embodiment of this application, in an optional implementation, an association relationship between the at least one ECU of the vehicle and the power battery/the storage battery may be preset. When learning, based on the upgrade task or the content of the first indication information, of a specific ECU in the at least one ECU that needs to perform software upgrade, the OTA control unit may learn, based on the preset association relationship, of a power battery/a storage battery associated with the to-be-upgraded ECU, and learn that the battery that needs to be monitored for the ECU is the power battery or the storage battery, to determine, based on a fault status of the battery, whether the upgrade operation of the vehicle can be performed.

For example, a preset association relationship between an ECU and a vehicle battery may be implemented by using an explicit mark. For example, each ECU of the vehicle may be marked with 1 or 0. The mark "1" may indicate that the ECU is associated with the power battery, and the mark "0" may indicate that the ECU is associated with the storage battery. When learning of the target ECU, the OTA control unit may determine, based on "1" or "0" marked for the target ECU, whether the battery that needs to be monitored for the target ECU is the power battery or the storage battery.

In another optional implementation, when S310 is implemented, the upgrade task from the OTA server or the first indication information from the user equipment may further indicate a high voltage signal or a low voltage signal associated with the at least one ECU, to indicate an association relationship between the at least one ECU and the power battery or the storage battery of the vehicle, so that the OTA control unit can determine, based on the high/low voltage signal associated with the ECU, whether the battery that needs to be monitored for the ECU is the power battery or the storage battery.

For example, the high voltage signal may be associated with the power battery of the vehicle, and the low voltage signal may be associated with the storage battery of the vehicle. In this case, after determining the target ECU that needs to perform software upgrade, the OTA control unit may monitor a status of the power battery based on that the target ECU is associated with the high voltage signal, or monitor a status of the storage battery based on that the target ECU is associated with the low voltage signal.

It should be understood that an association relationship between a high/low voltage signal and a vehicle battery is merely an example for description herein, and does not constitute any limitation. In actual application, the low voltage signal may be associated with the power battery of the vehicle, the high voltage signal may be associated with the storage battery of the vehicle, and the association relationship may be agreed on according to a communication protocol on a side of the vehicle, or may be affected by a software version. This is not limited in embodiments of this application. In addition, with evolution of a vehicle function or upgrade of a software version, an association relationship between a high/low voltage signal and a vehicle battery may change. Details are not described herein again.

It should be noted that, in this embodiment of this application, the function of monitoring the status of the power battery or the storage battery of the vehicle by the OTA control unit may be preset, and may be performed in real time or periodically after the vehicle is put into use. In some embodiments, the function of monitoring the status of the power battery or the storage battery of the vehicle by the OTA control unit may alternatively be woken up by using the upgrade task from the OTA server or the first indication information from the user equipment. In some other embodiments, the OTA control unit may receive second indication information from the OTA server or receive third indication information from the user equipment, where the second indication information and the third indication information may indicate to detect whether the power battery or the storage battery is faulty, that is, the second indication information or the third indication information may wake up the function of monitoring the status of the power battery or the storage battery of the vehicle by the OTA control unit. The user equipment may include the vehicle or the intelligent terminal of the user who uses the vehicle. A wake-up occasion or a wake-up manner of the monitoring function is not limited in embodiments of this application. After the monitoring function is woken up, the OTA control unit may determine, in real time based on whether each battery of the vehicle is faulty, how to perform the upgrade operation of the vehicle.

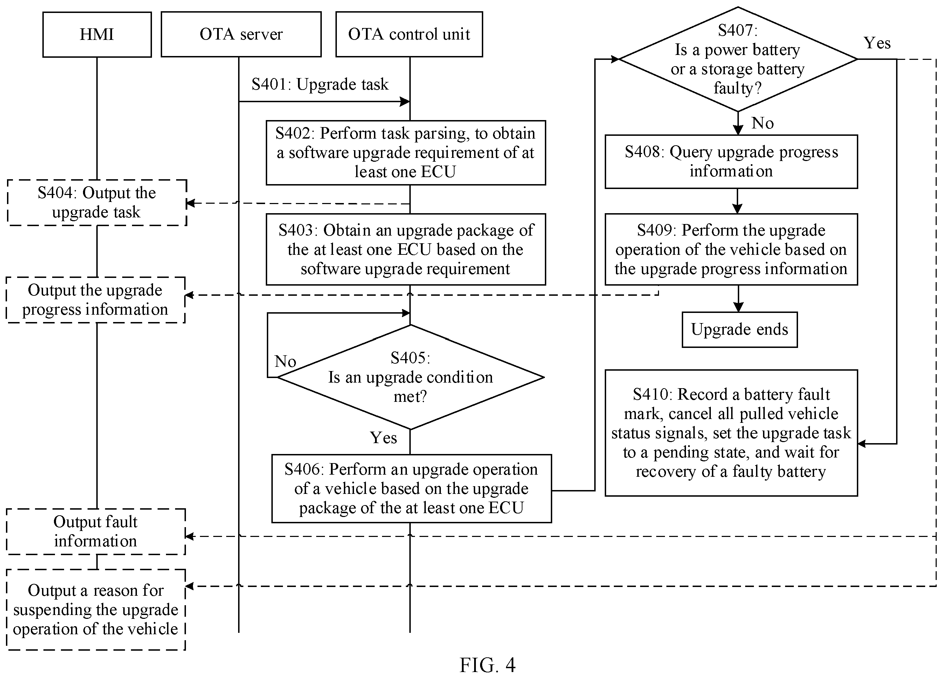

For example, when S310 is implemented, the OTA server delivers the upgrade task to the OTA control unit of the vehicle to trigger the OTA upgrade procedure of the vehicle. As shown in FIG. 4, the upgrade method may specifically include the following steps.

S401: An OTA server sends an upgrade task to an OTA control unit of a vehicle, and correspondingly, the OTA control unit receives the upgrade task from the OTA server.

S402: The OTA control unit performs task parsing on the received upgrade task, to obtain a software upgrade requirement of at least one ECU.

For example, the upgrade task may indicate an identifier, a software version, and the like of the at least one ECU that is to perform software upgrade. The OTA control unit may learn, based on information such as the identifier and the software version that are obtained through parsing, of a target ECU that needs to perform software upgrade.

Alternatively, the upgrade task may indicate a high voltage signal or a low voltage signal associated with the at least one ECU. The high voltage signal may be associated with a power battery of the vehicle, and the low voltage signal may be associated with a storage battery of the vehicle. The OTA control unit may learn, based on an association relationship between each ECU and a high/low voltage signal obtained through parsing, of a battery that needs to be monitored for a target ECU.

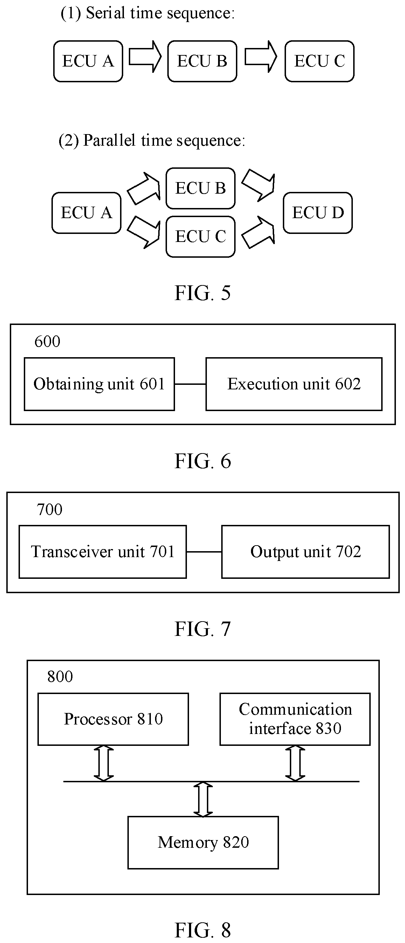

Alternatively, the upgrade task may further include software upgrade time sequence information of the at least one ECU, and the OTA control unit may learn, based on the software upgrade time sequence information obtained through parsing, of a time sequence of performing software upgrade on ECUs. As shown in FIG. 5, the software upgrade time sequence information of the at least one ECU may include two cases.
(1) Serial time sequence: indicates that different ECUs need to sequentially perform OTA upgrade in a serial sequence. For example, in FIG. 5, software upgrade is first performed on an ECU A, software upgrade is performed on an ECU B after software upgrade of the ECU A is completed, and software upgrade is performed on an ECU C after software upgrade of the ECU B is completed.
(2) Parallel time sequence: indicates that at least two ECUs in different ECUs can concurrently perform OTA upgrade. For example, in FIG. 5, software upgrade is first performed on an ECU A, software upgrade is then concurrently performed on an ECU B and an ECU C after software upgrade of the ECU A is completed, and software upgrade is performed on an ECU D after software upgrade of the ECU B and/or the ECU C is completed.

The OTA control unit may record information such as an initial phase and a status of each ECU in this upgrade task and task content obtained by parsing the upgrade task.

S403: The OTA control unit may obtain an upgrade package of the at least one ECU based on the software upgrade requirement.

For example, the OTA control unit may download the upgrade package of the at least one ECU from the OTA server based on the software upgrade requirement. The OTA server may actively deliver the upgrade package of the at least one ECU to the OTA control unit, or the OTA control unit may request the upgrade package of the at least one ECU from the OTA server, and the OTA server sends the upgrade package of the at least one ECU to the OTA control unit in response to a request from the OTA control unit. A manner of obtaining the upgrade package is not limited in embodiments of this application.

S404 (optional step): The OTA control unit may output the upgrade task on an HMI, and start an upgrade procedure of the vehicle after receiving, on the HMI, upgrade confirmation information entered by a user on the HMI. For example, the HMI herein may belong to the vehicle, or the HMI may belong to an intelligent terminal of a user who uses the vehicle. This is not limited in embodiments of this application.

S405: The OTA control unit performs status check on the vehicle, to determine whether the vehicle meets an upgrade condition. If it is determined, based on status information of the vehicle, that the vehicle meets the upgrade condition, S406 is performed. If it is determined, based on status information of the vehicle, that the vehicle does not meet the upgrade condition, execution of the current upgrade task is suspended, and status check is waited to be performed on the vehicle next time, to determine whether the vehicle meets the upgrade condition.

In this embodiment of this application, the status information of the vehicle may be used to describe a hardware status and/or a software status of the vehicle. The upgrade condition is associated with the status information, and may be used to indicate a condition that the vehicle needs to meet in a corresponding status.

For example, the status information may include at least one of the following: electricity information of the storage battery of the vehicle, electricity information of the power battery of the vehicle, a speed of the vehicle, gear information of the vehicle, or braking information of the vehicle; and the upgrade condition includes at least one of the following: electricity of the storage battery is greater than or equal to a first threshold (for example, 30%), electricity of the power battery is greater than or equal to a second threshold (for example, 30%), the speed of the vehicle is less than or equal to a third threshold (for example, 0), the vehicle is in a parking gear (for example, a P gear), or the vehicle is in a parking brake state.

Specifically, electricity of a battery is used as an example. Software upgrade of the ECU takes a long time. If the storage battery or the power battery associated with the target ECU is lower on electricity, the electricity may be exhausted in an upgrade process, and consequently upgrade is interrupted. To avoid interruption caused by insufficient electricity as much as possible, when status check is performed on the vehicle, the electricity of the storage battery or the power battery may be checked. If current remaining electricity of the storage battery or the power battery is greater than or equal to a corresponding threshold, it indicates that the remaining electricity can support complete software upgrade. In this case, the electricity of the battery meets the corresponding upgrade condition, and OTA upgrade may be allowed. On the contrary, if the remaining electricity of the storage battery or the power battery is less than the corresponding threshold, there is a high probability that upgrade is interrupted due to insufficient electricity in the OTA upgrade process. In this case, the upgrade condition corresponding to the electricity of the battery is not met, and OTA upgrade is not recommended. It should be understood that, in this embodiment of this application, the first threshold or the second threshold is merely an example, specific values of the two thresholds are not limited, and whether the two thresholds are the same or different is not limited. Details are not described herein again.

The speed of the vehicle is used as an example. To ensure driving safety of the vehicle, OTA upgrade is generally not allowed in a driving process. If a current speed of the vehicle is not zero when status check is performed on the vehicle, it indicates that the vehicle is driving. In this case, performing OTA upgrade may cause some functions of the vehicle to be unavailable, and a traffic accident is likely to be caused. Therefore, an upgrade condition corresponding to the speed is not met, and OTA upgrade is not allowed. If the speed of the vehicle is zero, it indicates that the vehicle does not drive, and no traffic accident is caused even if OTA upgrade is performed. Therefore, an upgrade condition corresponding to the speed is met, and OTA upgrade is allowed.

The parking gear is used as an example. Generally, when the vehicle stops, a driver adjusts a gear of the vehicle to the parking gear, to ensure that the vehicle is stationary at a current location. On the contrary, if the driver adjusts the gear of the vehicle to a forward gear (for example, a D gear) or a reverse gear (for example, an R gear), the vehicle still moves forward or backward. In this case, if OTA upgrade is performed, it is also unsafe. Therefore, when status check is performed on the vehicle, whether the gear of the vehicle is in the parking gear may be further checked. If the gear of the vehicle is in the parking gear, it indicates that the vehicle currently does not support moving, an upgrade condition corresponding to the gear is met, and OTA upgrade is allowed. On the contrary, if the gear of the vehicle is not in the parking gear, it indicates that the vehicle currently has a possibility of moving, the upgrade condition corresponding to the gear is not met, and OTA upgrade is not allowed.

The parking brake state of the vehicle is used as an example. Generally, when the vehicle stops, to prevent the vehicle from coasting forward or backward on the uneven ground, a driver further starts a manual or an electronic parking system of the vehicle, so that the vehicle is in the parking brake state. Therefore, when status check is performed on the vehicle, whether the vehicle is in the parking brake state may be further checked. If the vehicle is in the parking brake state, it indicates that the vehicle currently does not support coasting, an upgrade condition corresponding to parking braking is met, and OTA upgrade is allowed. On the contrary, if the vehicle is not in the parking brake state, it indicates that the vehicle currently has a possibility of coasting, the upgrade condition corresponding to the parking braking is not met, and OTA upgrade is not allowed.

It should be understood that the status information and the upgrade condition are merely examples for description rather than any limitation. In actual application, any status of software/hardware that may affect OTA upgrade or conflict with an OTA upgrade operation may be a part of performing status check on the vehicle. This is not limited in embodiments of this application, and details are not described herein again.

S406: The OTA control unit performs the upgrade operation of the vehicle based on the upgrade package of the at least one ECU and the software upgrade time sequence information of the at least one ECU, to perform software upgrade on the at least one ECU.

During specific implementation, when the OTA control unit performs software upgrade on any ECU, used as the target ECU, of the at least one ECU, S406 may include the following steps.

S407: The OTA control unit first queries a status of a battery (the power battery or the storage battery) associated with the target ECU, to determine whether the power battery or the storage battery of the vehicle is faulty.

For example, if the target ECU is associated with the high voltage signal, the OTA control unit queries the status of the power battery. If the target ECU is associated with the low voltage signal, the OTA control unit queries the status of the storage battery.

For example, the OTA control unit may query the status of the power battery or the storage battery by interacting with a battery fault monitoring unit, and a battery fault may be identified based on an explicit or implicit fault mark. If the OTA control unit finds that the power battery or the storage battery has a fault mark, it may be determined that the power battery or the storage battery is faulty. If the OTA control unit does not find a fault mark, it may be determined that the power battery or the storage battery is not faulty.

If the power battery or the storage battery associated with the target ECU is faulty, S410 is performed. If the power battery or the storage battery associated with the target ECU is not faulty (including that no fault occurs or the fault is rectified), S408 is performed.

S408: The OTA control unit interacts with an ECU upgrade context management unit to query upgrade progress information, and records the found upgrade progress information in a magnetic disk.

For example, the upgrade progress information may include information about any one of the following phases: an upgrade phase, an activation phase, or a rollback phase, and information about any one of the following states of the ECU in each phase: an initial state, a notified execution state, an execution success state, or an execution failure state.

S409: The OTA control unit performs the upgrade operation of the vehicle based on the upgrade progress information.

It should be understood that, in S408, based on the found upgrade progress information, if it is at an initial moment of a 1^{st} to-be-upgraded ECU in the current upgrade task, in S409, the OTA control unit may perform OTA upgrade from the initial moment. If it is at an interruption node in a corresponding phase of the target ECU, in S409, the OTA control unit may continue to perform the OTA upgrade operation based on the interruption node. If it is at an end moment of a last to-be-upgraded ECU in the current upgrade task, in S409, the OTA control unit may end the current upgrade task.

S410: If the power battery or the storage battery associated with the target ECU is faulty, the battery fault monitoring unit associated with the OTA control unit may record a battery fault mark for the power battery or a faulty battery, and correspondingly, the OTA control unit may cancel all provided vehicle status signals (including an intra-vehicle network communication signal, a low voltage signal, a high voltage signal, or the like), set the upgrade task to a suspending state, and wait for recovery of the faulty battery. If a fault of the power battery or the storage battery associated with the target ECU is rectified, after S410, the OTA control unit may repeat steps S405 to S409, to continue to perform the upgrade operation of the vehicle, including periodically querying a status of the power battery or the storage battery associated with the target ECU, recording the upgrade progress information, and the like, until the upgrade task is completed.

In an optional implementation, in a process of performing S405 to S409, the OTA control unit may further output related information on the HMI, so that the user using the HMI can view execution information of the upgrade task in time.

For example, if the power battery or the storage battery is faulty, the OTA control unit may output fault information of the power battery or the storage battery on the HMI. The HMI may belong to the vehicle, or the HMI may belong to the intelligent terminal of the user who uses the vehicle, or the HMI may belong to an output device associated with the OTA server. This is not limited in embodiments of this application.

Alternatively, for example, in a process of performing the upgrade operation, the OTA control unit may output the upgrade progress information on the HMI, including but not limited to information about any one of the following phases described in the foregoing embodiment: an upgrade phase, an activation phase, or a rollback phase, and information about any one of the following states of the ECU in each phase: an initial state, a notified execution state, an execution success state, or an execution failure state. The HMI may belong to the vehicle, or the HMI may belong to the intelligent terminal of the user who uses the vehicle, or the HMI may belong to an output device associated with the OTA server. This is not limited in embodiments of this application.

Alternatively, for example, in a process of performing the upgrade operation, if the OTA control unit suspends the upgrade operation of the vehicle, the OTA control unit may further output, on the HMI, a reason for suspending the upgrade operation of the vehicle. The HMI may belong to the vehicle, or the HMI may belong to the intelligent terminal of the user who uses the vehicle, or the HMI may belong to an output device associated with the OTA server. This is not limited in embodiments of this application. The reason for suspending the upgrade operation of the vehicle includes that the power battery or the storage battery is faulty, or may include another reason that affects OTA upgrade or conflicts with the OTA upgrade operation. This is not limited in embodiments of this application.

It should be understood that this is merely an example for outputting the information on the HMI, and does not constitute any limitation. In actual application. In a process in which the OTA control unit performs the upgrade operation of the vehicle, any information may be output on the HMI. This is not limited in embodiments of this application, and details are not described herein again.

So far, the upgrade method in this embodiment of this application is described in detail with reference to the accompanying drawings and the embodiment. In the method, when software upgrade needs to be performed on the ECU, the status of the battery associated with the low voltage signal or the high voltage signal associated with the ECU is monitored in real time, so that the battery fault can be detected in time, and a fault reason, an upgrade interruption reason, or the like can be recorded, to resolve the fault in time, so as to avoid a case in which the upgrade task directly fails due to the battery fault, and improve an OTA upgrade success rate. In addition, the upgrade progress information is recorded in the process of performing the upgrade operation. After the fault of the power battery or the fault of the storage battery is rectified, the OTA control unit may re-check the status of the vehicle, and based on the software upgrade requirement and upgrade progress information recorded when the upgrade operation of the vehicle is suspended, continue to perform the upgrade operation of the vehicle instead of starting upgrade anew. This helps reduce upgrade duration and save user mobile data. The upgrade method is also applicable to a terminal device other than the vehicle. Details are not described herein again.

It should be noted that, in the upgrade method in this embodiment of this application, a circuit breaker mechanism is introduced. The circuit breaker mechanism is a mechanism for controlling maximum upgrade duration of the entire vehicle. A cloud may define circuit breaker duration. For example, the cloud defines the maximum upgrade duration as 5 hours. If the upgrade duration exceeds 5 hours, the task directly fails. When receiving the upgrade task and starting upgrade, the OTA control unit may record a start time when the OTA control unit enters an upgrade mode for the first time and starts software upgrade based on a 1^{st} upgrade package obtained through downloading. After five hours, if upgrade of software of some or all ECUs indicated by the upgrade task is still not completed, the OTA control unit may indicate the entire vehicle to exit the upgrade mode, and set the upgrade task to a failure state. As shown in FIG. 4, performing S406 is considered as entering the upgrade mode. The OTA control unit may record a time of the current upgrade task when S406 is performed in the task, and uses the time as a start time of vehicle upgrade circuit breaker. When the battery is faulty in the process of performing the upgrade operation of the vehicle, the OTA control unit may clear the start time, re-perform S406, and re-record a start time after a battery fault is rectified. In this method, a circuit breaker time window can be postponed, to prevent a task from ending in direct failure because a battery fault is not rectified in a long time or fault recovery duration exceeds the circuit breaker duration.

An embodiment of this application further provides an upgrade apparatus, configured to perform the method performed by the OTA control unit or the HMI in the foregoing method embodiments. For related features, refer to the foregoing method embodiments. Details are not described herein again.

As shown in FIG. 6, an upgrade apparatus 600 may include an obtaining unit 601, configured to obtain a software upgrade requirement of at least one electronic control unit ECU of a vehicle, where the at least one ECU is associated with a power battery or a storage battery of the vehicle; and an execution unit 602, configured to: when it is determined that the power battery or the storage battery is not faulty, perform an upgrade operation of the vehicle based on the software upgrade requirement; or when it is determined that the power battery or the storage battery is faulty, suspend an upgrade operation of the vehicle.

In an optional implementation, the obtaining unit 601 is specifically configured to: receive an upgrade task from an over the air OTA server, where the upgrade task indicates the software upgrade requirement of the at least one ECU; or obtain the software upgrade requirement of the at least one ECU based on first indication information entered by a user on user equipment UE, where the UE includes the vehicle.

In an optional implementation, the upgrade task or the first indication information further indicates a high voltage signal or a low voltage signal associated with the at least one ECU, the high voltage signal is associated with the power battery, and the low voltage signal is associated with the storage battery.

In an optional implementation, the apparatus further includes a transceiver unit, configured to: receive second indication information from the OTA server or receive third indication information from the UE, where the second indication information and the third indication information indicate to detect whether the power battery or the storage battery is faulty, and the UE includes the vehicle or an intelligent terminal of the user who uses the vehicle.

In an optional implementation, the execution unit is further configured to output fault information of the power battery or the storage battery on a human machine interface HMI, where the HMI belongs to the vehicle, or the HMI belongs to the intelligent terminal of the user who uses the vehicle, or the HMI belongs to an output device associated with the over the air OTA server.

In an optional implementation, the execution unit is further configured to output, on the HMI, a reason for suspending the upgrade operation of the vehicle, where the HMI belongs to the vehicle, or the HMI belongs to the intelligent terminal of the user who uses the vehicle, or the HMI belongs to the output device associated with the over the air OTA server; and the reason for suspending the upgrade operation of the vehicle includes that the power battery is faulty or the storage battery is faulty.

In an optional implementation, the apparatus further includes: a recording unit, configured to record upgrade progress information of the at least one ECU; and the execution unit is further configured to: after a fault of the power battery or a fault of the storage battery is rectified, continue to perform the upgrade operation of the vehicle based on the software upgrade requirement and upgrade progress information recorded when the upgrade operation of the vehicle is suspended.

In an optional implementation, the upgrade progress information includes information about any one of the following phases: an upgrade phase, an activation phase, or a rollback phase, and information about any one of the following states of the ECU in each phase: an initial state, a notified execution state, an execution success state, or an execution failure state.

In an optional implementation, the execution unit is further configured to output the upgrade progress information on the HMI, where the HMI belongs to the vehicle, or the HMI belongs to the intelligent terminal of the user who uses the vehicle, or the HMI belongs to the output device associated with the OTA server.

In an optional implementation, the obtaining unit is further configured to obtain software upgrade time sequence information of the at least one ECU; and the execution unit is specifically configured to perform the upgrade operation of the vehicle based on the software upgrade requirement and the software upgrade time sequence information.

In an optional implementation, the execution unit 602 is specifically configured to: obtain an upgrade package of the at least one ECU based on the software upgrade requirement; and perform the upgrade operation of the vehicle based on the upgrade package.

In an optional implementation, the apparatus further includes a determining unit, configured to determine, based on status information of the vehicle, that the vehicle meets an upgrade condition, where the status information is used to describe a hardware status and/or a software status of the vehicle.

In an optional implementation, the status information includes at least one of the following: electricity information of the storage battery of the vehicle, electricity information of the power battery of the vehicle, a speed of the vehicle, gear information of the vehicle, or braking information of the vehicle; and the upgrade condition includes at least one of the following: electricity of the storage battery is greater than or equal to a first threshold, electricity of the power battery is greater than or equal to a second threshold, the speed of the vehicle is less than or equal to a third threshold, the vehicle is in a parking gear, or the vehicle is in a parking brake state.

As shown in FIG. 7, an apparatus 700 may include a transceiver unit 701, configured to receive control information, where the control information is associated with a software upgrade requirement of at least one electronic control unit ECU of a vehicle, and the at least one ECU is associated with a power battery or a storage battery of the vehicle; and an output unit 702, configured to: when the power battery or the storage battery is not faulty, output upgrade progress information of the at least one ECU based on the control information; or when the power battery or the storage battery is faulty, output, based on the control information, a reason for suspending an upgrade operation of the vehicle.

In an optional implementation, the upgrade progress information includes information about any one of the following phases: an upgrade phase, an activation phase, or a rollback phase, and information about any one of the following states of the ECU in each phase: an initial state, a notified execution state, an execution success state, or an execution failure state.

In an optional implementation, the transceiver unit 701 is further configured to: receive second indication information from an OTA server or receive third indication information from UE, where the second indication information and the third indication information indicate to detect whether the power battery or the storage battery is faulty; and the output unit is further configured to output the second indication information or the third indication information.

In an optional implementation, the output unit 702 is further configured to output fault information of the power battery or the storage battery.

It should be understood that division into the units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All the units of the apparatus may be implemented in a form of software called by the processor, or may be implemented in a form of hardware circuit, or some of the units are implemented in a form of software called by the processor, and remaining units are implemented in a form of hardware circuit.

In embodiments of this application, the processor is a circuit having a signal processing capability. In an implementation, the processor may be a circuit having a capability of instruction reading and running, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated, or may be implemented independently. In an implementation, these units are integrated together and implemented in a form of a system on chip (system on chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the communication apparatus in the foregoing embodiments may be in a form shown in FIG. 8.

An apparatus 800 shown in FIG. 8 includes at least one processor 810 and a communication interface 830. In an optional design, the apparatus 800 may further include a memory 820.

A specific connection medium between the processor 810 and the memory 820 is not limited in embodiments of this application.

In the apparatus shown in FIG. 8, when communicating with another device, the processor 810 may transmit data through the communication interface 830.

When the communication apparatus is in the form shown in FIG. 8, the processor 810 in FIG. 8 may invoke computer-executable instructions stored in the memory 820, so that the apparatus 800 can perform any one of the foregoing method embodiments.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, so that the processor performs the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system on chip (system on chip, SoC), or may be a CPU, or may be a network processor (network processor, NP), or may be a microcontroller unit (microcontroller unit, MCU), or may be a PLD, or another integrated chip, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code, and when the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. **In** this case, this application is intended to cover these modifications and variations of this application provided that they fall within the scope of protection defined by the following claims of this application and their equivalent technologies. **In** embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

## Claims

1. An upgrade method, comprising:
obtaining a software upgrade requirement of at least one electronic control unit ECU of a vehicle, wherein the at least one ECU is associated with a power battery or a storage battery of the vehicle; and
when it is determined that the power battery or the storage battery is not faulty, performing an upgrade operation of the vehicle based on the software upgrade requirement; or
when it is determined that the power battery or the storage battery is faulty, suspending an upgrade operation of the vehicle.

2. The method according to claim 1, wherein the obtaining a software upgrade requirement of at least one electronic control unit ECU of a vehicle comprises:
receiving an upgrade task from an over the air OTA server, wherein the upgrade task indicates the software upgrade requirement of the at least one ECU; or
obtaining the software upgrade requirement of the at least one ECU based on first indication information entered by a user on user equipment UE, wherein the UE comprises the vehicle.

3. The method according to claim 2, wherein the upgrade task or the first indication information further indicates a high voltage signal or a low voltage signal associated with the at least one ECU, the high voltage signal is associated with the power battery, and the low voltage signal is associated with the storage battery.

4. The method according to any one of claims 1 to 3, wherein the method further comprises:
receiving second indication information from the OTA server or receiving third indication information from the UE, wherein the second indication information and the third indication information indicate to detect whether the power battery or the storage battery is faulty, and the UE comprises the vehicle or an intelligent terminal of the user who uses the vehicle.

5. The method according to any one of claims 1 to 4, wherein the method further comprises:
outputting fault information of the power battery or the storage battery on a human machine interface HMI, wherein the HMI belongs to the vehicle, or the HMI belongs to the intelligent terminal of the user who uses the vehicle, or the HMI belongs to an output device associated with the over the air OTA server.

6. The method according to any one of claims 1 to 5, wherein the method further comprises:
outputting, on the HMI, a reason for suspending the upgrade operation of the vehicle, wherein the HMI belongs to the vehicle, or the HMI belongs to the intelligent terminal of the user who uses the vehicle, or the HMI belongs to the output device associated with the over the air OTA server; and the reason for suspending the upgrade operation of the vehicle comprises that the power battery is faulty or the storage battery is faulty.

7. The method according to any one of claims 1 to 6, wherein the method further comprises:
recording upgrade progress information of the at least one ECU; and
after a fault of the power battery or a fault of the storage battery is rectified, continuing to perform the upgrade operation of the vehicle based on the software upgrade requirement and upgrade progress information recorded when the upgrade operation of the vehicle is suspended.

8. The method according to claim 7, wherein the upgrade progress information comprises information about any one of the following phases: an upgrade phase, an activation phase, or a rollback phase, and information about any one of the following states of the ECU in each phase: an initial state, a notified execution state, an execution success state, or an execution failure state.

9. The method according to claim 7 or 8, wherein the method further comprises:
outputting the upgrade progress information on the HMI, wherein the HMI belongs to the vehicle, or the HMI belongs to the intelligent terminal of the user who uses the vehicle, or the HMI belongs to the output device associated with the OTA server.

10. The method according to any one of claims 1 to 9, wherein the method further comprises:
obtaining software upgrade time sequence information of the at least one ECU; and
the performing an upgrade operation of the vehicle based on the software upgrade requirement comprises:
performing the upgrade operation of the vehicle based on the software upgrade requirement and the software upgrade time sequence information.

11. The method according to any one of claims 1 to 10, wherein the performing an upgrade operation of the vehicle based on the software upgrade requirement specifically comprises:
obtaining an upgrade package of the at least one ECU based on the software upgrade requirement; and
performing the upgrade operation of the vehicle based on the upgrade package.

12. The method according to claim 11, wherein the method further comprises:
determining, based on status information of the vehicle, that the vehicle meets an upgrade condition, wherein the status information is used to describe a hardware status and/or a software status of the vehicle.

13. The method according to claim 12, wherein the status information comprises at least one of the following: electricity information of the storage battery of the vehicle, electricity information of the power battery of the vehicle, a speed of the vehicle, gear information of the vehicle, or braking information of the vehicle; and
the upgrade condition comprises at least one of the following: electricity of the storage battery is greater than or equal to a first threshold, electricity of the power battery is greater than or equal to a second threshold, the speed of the vehicle is less than or equal to a third threshold, the vehicle is in a parking gear, or the vehicle is in a parking brake state.

14. An upgrade method, comprising:
receiving control information, wherein the control information is associated with a software upgrade requirement of at least one electronic control unit ECU of a vehicle, and the at least one ECU is associated with a power battery or a storage battery of the vehicle; and
when the power battery or the storage battery is not faulty, outputting upgrade progress information of the at least one ECU based on the control information; or
when the power battery or the storage battery is faulty, outputting, based on the control information, a reason for suspending an upgrade operation of the vehicle.

15. The method according to claim 14, wherein the upgrade progress information comprises information about any one of the following phases: an upgrade phase, an activation phase, or a rollback phase, and information about any one of the following states of the ECU in each phase: an initial state, a notified execution state, an execution success state, or an execution failure state.

16. The method according to claim 14 or 15, wherein the method further comprises:
receiving second indication information from an OTA server or receiving third indication information from UE, wherein the second indication information and the third indication information indicate to detect whether the power battery or the storage battery is faulty; and
outputting the second indication information or the third indication information.

17. The method according to any one of claims 14 to 16, wherein the method further comprises:
outputting fault information of the power battery or the storage battery.

18. An upgrade apparatus, comprising:
an obtaining unit, configured to obtain a software upgrade requirement of at least one electronic control unit ECU of a vehicle, wherein the at least one ECU is associated with a power battery or a storage battery of the vehicle; and
an execution unit, configured to: when it is determined that the power battery or the storage battery is not faulty, perform an upgrade operation of the vehicle based on the software upgrade requirement; or when it is determined that the power battery or the storage battery is faulty, suspend an upgrade operation of the vehicle.

19. An upgrade apparatus, comprising:
a transceiver unit, configured to receive control information, wherein the control information is associated with a software upgrade requirement of at least one electronic control unit ECU of a vehicle, and the at least one ECU is associated with a power battery or a storage battery of the vehicle; and
an output unit, configured to: when the power battery or the storage battery is not faulty, output upgrade progress information of the at least one ECU based on the control information; or when the power battery or the storage battery is faulty, output, based on the control information, a reason for suspending an upgrade operation of the vehicle.

20. A communication apparatus, wherein the communication apparatus comprises:
a communication interface, configured to communicate with another apparatus; and
a processor, coupled to the communication interface, so that the communication apparatus performs the method according to any one of claims 1 to 13 or the method according to any one of claims 14 to 17.

21. A computer-readable storage medium, wherein the computer-readable storage medium stores a computer program, and when the computer program is run on a computer, the computer is enabled to perform the method according to any one of claims 1 to 13 or the method according to any one of claims 14 to 17.

22. A computer program product, wherein the computer program product comprises a computer program, and when the computer program is run on a computer, the computer is enabled to perform the method according to any one of claims 1 to 13 or the method according to any one of claims 14 to 17.

23. A chip, comprising a processor, wherein the processor is coupled to a memory, and is configured to execute a computer program or instructions stored in the memory, and when the computer program or the instructions are executed, the method according to any one of claims 1 to 13 is implemented, or the method according to any one of claims 14 to 17 is implemented.

24. A vehicle, comprising a unit configured to implement the method according to any one of claims 1 to 13.

25. The vehicle according to claim 24, comprising a unit configured to implement the method according to any one of claims 14 to 17.

26. A communication system, comprising an upgrade apparatus configured to implement the method according to any one of claims 1 to 13 and an upgrade apparatus configured to implement the method according to any one of claims 14 to 17.
